# EUROPEAN PATENT APPLICATION

(11) **EP 1 840 475 A1**
(43) Date of publication of application: **03.10.2007**
(21) Application number: 06711546.9
(22) Date of filing: 11.01.2006
(51) Int. Cl.: F24F 1/00

(54) **AIR CONDITIONER**

(30) Priority: 12.01.2005 JP 2005005198; 12.01.2005 JP 2005005201; 12.01.2005 JP 2005005208; 12.01.2005 JP 2005005209
(71) Applicant: DAIKIN INDUSTRIES, LTD., Osaka-shi, Osaka 530-8323 (JP)
(72) Inventor: SAKASHITA, Akihiko c/o Kanaoka Factory, Sakai Plant, Sakai-shi Osaka 591-8511 (JP); TAKEUCHI, Makio c/o Kanaoka Factory, Sakai Plant D., Sakai-shi Osaka 591-8511 (JP); NAKATA, Haruo c/o Kanaoka Factory, Sakai Plant, Sakai-shi Osaka 591-8511 (JP); SANAGI, Tsunehisa c/o Kanaoka Factory, Sakai Plant, Sakai-shi Osaka 591-8511 (JP)
(74) Representative: HOFFMANN EITLE
(86) International application number: PCT/JP2006/300197
(87) International publication number: WO 2006/075607

(57) **Abstract**

A simple and low-cost attachment structure for attaching an antibacterial agent having a significant bacteriostasis is provided. In the vicinity of a suction port (23) of a drain pump (16) in a drain pan (8) of an air conditioner, an antibacterial agent unit (K) having an antibacterial agent (19, 19 --) capable of being brought into contact with drain water (D) is disposed, so that the antibacterial agent unit (K) disposed in the vicinity of the suction port (23) of the drain pump (16) at the lowest portion in the drain pan (8) is reliably immersed into the drain water (D) when the drain pump (16) is operating and not operating.

## Description

### TECHNICAL FIELD

The present invention relates to an air conditioner. More specifically, the present invention relates to an air conditioner capable of providing a maximum level of bacteriostasis (in other words, anti-bacterial effect) in a drain pan and a drain line on the downstream side of drain pump.

### BACKGROUND ART

A general air conditioner includes a heat exchanger, a fan, and a drain pan provided below the heat exchanger and configured to receive drain water. Bacteria often multiply in the drain water in the drain pan.

Multiplication of bacteria in the drain water causes production of slimes, which causes problems such as foul smell and a clog in a drain line.

As a countermeasure against the above described problems, an antibacterial agent is placed in a drain pan and the antibacterial agent is immersed in the drain water so as to prevent the growth of bacteria (see Patent Document 1).

As another countermeasure, an antibacterial agent is kneaded into a drain pan sheet affixed to the inner surface of the drain pan so as to bring the antibacterial agent to come into contact with the drain water, and thereby the growth of bacteria is prevented (see Patent Document 2).
<Patent Document 1>
   Japanese Patent Application Publication No. 2000-74409
<Patent Document 2>
   Japanese Patent Application Publication No. 2000-205591

### DISCLOSURE OF THE INVENTION

### <Object to be Achieved by the Invention>

However, as disclosed in the aforementioned Patent Document 1, when the antibacterial agent is placed in the drain pan, there will be a need for an adequate support member for positioning such an antibacterial agent, which may consequently complicate the structure and incur an increase in costs. In addition, as disclosed in the aforementioned Patent Document 2, when an antibacterial agent is kneaded into the drain pan sheet, since the drain pan sheet is formed from a thin member, an absolute amount of antibacterial agent tends to be insufficient. Accordingly, such an antibacterial agent cannot be used over a long time and must be replaced from time to time.

In view of the above problems, the present invention aims to provide a simple and low-cost attachment structure for attaching an antibacterial agent having a significant bacteriostasis.

### <Means to Achieve the Object>

According to the present invention, as a first means to solve the above described problems, in an air conditioner including a heat exchanger 6, a drain pan 8 configured to collect drain water D from the heat exchanger 6, and a drain pump 16 provided to the drain pan 8 and configured to pump out the drain water D, the air conditioner includes an antibacterial agent unit K provided in the vicinity of a suction port 23 of the drain pump 16 in the drain pan 8, which has antibacterial agents 19, 19

### -- capable of being brought into contact with the drain water D.

Because of the configuration described above, a portion in the vicinity of the suction port 23 of the drain pump 16 is the lowest portion in the drain pan 8, thus the antibacterial agent unit K disposed in the vicinity of this lowest portion is reliably immersed into the drain water D when the drain pump 16 is operating and not operating. Accordingly, contact between the antibacterial agents 19, 19 -- and the drain water D is maintained at all times, thus achieving bacteriostasis in the drain water D (in other words, anti-slime effect). In addition, when the drain pump 16 is operating, the drain water D that contacted the antibacterial agents 19, 19 -- flows to the downstream side of the drain pump 16, thus enhancing bacteriostasis on the downstream side of the drain pump 16.

According to the present invention, as a second means to solve the above described problems, an air conditioner having the first means can be configured such that the antibacterial agent unit K is attached to the drain pump 16. This type of configuration can simplify an attachment structure of the antibacterial agent unit K and also facilitate positioning and replacement of the antibacterial agent unit K.

According to the present invention, as a third means to solve the above described problems, in an air conditioner including a heat exchanger 6, a drain pan 8 configured to receive drain water D from the heat exchanger 6, and a drain pump 16 provided to the drain pan 8 and configured to pump out the drain water D, a member which constitutes the drain pump 16 and which is capable of being brought into contact with the drain water D is formed from an antibacterial material into which antibacterial agents 19, 19 -- are kneaded.

Because of the configuration described above, the drain water D that contacted the antibacterial agents 19, 19 -- flows to the downstream side of the drain pump 16 when the drain pump 16 is operating, thus enhancing bacteriostasis on the downstream side of the drain pump 16. In addition, since the return drain water D during the time when the drain pump 16 is not operating will always contact the antibacterial agents 19, 19 --, it is possible to wash the antibacterial agents 19, 19 --, thus achieving bacteriostasis.

According to the present invention, further, as a fourth means to solve the above described problems, an air conditioner having the third means can be configured such that the member formed from the antibacterial material is a scroll member. This type of configuration can ensure contact between the drain water D and the antibacterial agents 19, 19 -- not only when the drain pump 16 is operating but also when the drain pump 16 is not operating, thus enhancing bacteriostasis.

According to the present invention, further, as a fifth means to solve the above described problems, an air conditioner having the third means or the fourth means can be configured such that the member formed from the antibacterial material is an impeller 26. This type of configuration increases contact rate between the antibacterial agents 19, 19 -- and the drain water D since the impeller 26 is a member that is rotationally driven when the drain pump is operating, thus enhancing bacteriostasis.

### <Effect of the Invention>

According to the first means of the present invention, in the air conditioner including the heat exchanger 6, the drain pan 8 configured to receive the drain water D from the heat exchanger 6, and the drain pump 16 provided to the drain pan 8 and configured to pump out the drain water D, the antibacterial agent unit K having the antibacterial agents 19, 19 -- capable of being brought into contact with the drain water D is provided in the vicinity of the suction port 23 of the drain pump 16 in the drain pan 8. The antibacterial agent unit K disposed in the vicinity of the suction port 23 of the drain pump 16 that is the lowest portion in the drain pan 8 is configured so as to be reliably immersed into the drain water D when the drain pump 16 is operating and not operating. Accordingly, contact between the antibacterial agents 19, 19 -- and the drain water D is maintained at all times, providing an effect of achieving bacteriostasis in the drain water D (in other words, anti-slime effect). In addition, when the drain pump 16 is operating, the drain water D that contacted the antibacterial agents 19, 19 -- flows to the downstream side of the drain pump 16, thus enhancing bacteriostasis on the downstream side of the drain pump 16.

As in the second means of the present invention, an air conditioner having the first means as described above can be configured such that the antibacterial agent unit K is attached to the drain pump 16. This type of configuration can simplify an attachment structure of the antibacterial agent unit K and also facilitate positioning and replacement of the antibacterial agent unit K.

According to the third means of the present invention, in an air conditioner including the heat exchanger 6, the drain pan 8 configured to receive the drain water D from the heat exchanger 6, and the drain pump 16 provided to the drain pan 8 and configured to pump out the drain water D, a member which constitutes the drain pump 16 and which is capable of being brought into contact with the drain water D is formed from an antibacterial material into which the antibacterial agents 19, 19 -- are kneaded. Accordingly, when the drain pump 16 is operating, the drain water D that contacted the antibacterial agents 19, 19 -- flows to the downstream side of the drain pump 16, thus enhancing bacteriostasis on the downstream side of the drain pump 16. In addition, since the return drain water D during the time when the drain pump 16 is not operating will always contact the antibacterial agents 19, 19 --, it is possible to wash the antibacterial agents 19, 19 --, thus achieving bacteriostasis.

As in the fourth means of the present invention, an air conditioner having the third means as described above can be configured such that the member formed from the antibacterial material is the scroll member 24. This type of configuration can ensure contact between the drain water D and the antibacterial agents 19, 19 -- not only when the drain pump 16 is operating but also when the drain pump 16 is not operating, thus enhancing bacteriostasis.

As in the fifth means of the present invention, an air conditioner having the third means or the fourth means as described above can be configured such that the member formed from the antibacterial material is the impeller 26. This type of configuration increases contact rate between the antibacterial agents 19, 19 -- and the drain water D since the impeller 26 is a member that is rotationally driven when the drain pump is operating, thus enhancing bacteriostasis.

### BRIEF DESCRIPTION OF THE DRAWINGS

Figure 1 is a longitudinal cross sectional view of an air conditioner (indoor unit) according to an embodiment of the present invention.
Figure 2 is a cross sectional view of an attachment structure for attaching an antibacterial agent in an air conditioner according to a first embodiment of the present invention.
Figure 3(a) is an elevation view of the antibacterial agent in Example I, which is used in the air conditioner (indoor unit) according to the first embodiment of the present invention; and Figure 3(b) is an enlarged view of the inside of the same.
Figure 4(a) is a plan view of the antibacterial agent in Example I, which is used in the air conditioner (indoor unit) according to the first embodiment of the present invention; and Figure 4(b) is an enlarged view of the inside of the same.
Figure 5(a) is an elevation view of the antibacterial agent in Example II, which is used in the air conditioner (indoor unit) according to the first embodiment of the present invention; and Figure 5(b) is an enlarged view of the inside of the same.
Figure 6(a) is a plan view of the antibacterial agent in Example II, which is used in the air conditioner (indoor unit) according to the first embodiment of the present invention; and Figure 6(b) is an enlarged view of the inside of the same.
Figure 7(a) is an elevation view of the antibacterial agent in Example III, which is used in the air conditioner (indoor unit) according to the first embodiment of the present invention; and Figure 7(b) is an enlarged view of the inside of the same.
Figure 8(a) is a plan view of a an antibacterial agent in Example III, which is used in the air conditioner (indoor unit) according to the first embodiment of the present invention; Figure 8(b) is an enlarged view of the inside of the same; and Figure 8(c) is an enlarged view of the inside of an alternative example.
Figure 9 is a cross sectional view of an attachment structure for attaching an antibacterial agent in an air conditioner according to a second embodiment of the present invention.
Figure 10 is a longitudinal sectional view of an attachment structure for attaching an antibacterial agent in an air conditioner according to a third embodiment of the present invention.
Figure 11 is a transverse sectional view of an attachment structure for attaching an antibacterial agent in an air conditioner according to a fourth embodiment of the present invention.
Figure 12 is an enlarged cross sectional view of an essential portion of an air conditioner (indoor unit) according to a fifth embodiment of the present invention.
Figure 13 is an enlarged cross sectional view of an essential portion showing attachment of an antibacterial agent unit in the air conditioner (indoor unit) according to the fifth embodiment of the present invention.
Figure 14 is an enlarged cross sectional view of an essential portion of a drain discharge device in an air conditioner according to a sixth embodiment of the present invention.
Figure 15 is an enlarged cross sectional view of an essential portion showing removal of a drain cock of the drain discharge device in the air conditioner according to the sixth embodiment of the present invention.
Figure 16 is an enlarged cross sectional view of an essential portion of a drain discharge device in an air conditioner according to a seventh embodiment of the present invention.
Figure 17 is an enlarged cross sectional view of an essential portion showing removal of a drain cock of the drain discharge device in the air conditioner according to the seventh embodiment of the present invention.
Figure 18 is a longitudinal cross sectional view of an air conditioner according to an eighth embodiment of the present invention.
Figure 19 is an enlarged cross sectional view of an essential portion of the air conditioner according to the eighth embodiment of the present invention.
Figure 20 is an enlarged sectional view of an essential portion showing removal of an antibacterial agent unit in the air conditioner according to the eighth embodiment of the present invention.
Figure 21 is a longitudinal cross sectional view of an air conditioner according to a ninth embodiment of the present invention.
Figure 22 is an enlarged cross sectional view of an essential portion of the air conditioner according to the ninth embodiment of the present invention.
Figure 23 is a plan view showing an area in which the antibacterial agent unit can be disposed in a drain pan according to the eighth embodiment and the ninth embodiment of the present invention.

### DESCRIPTION OF THE REFERENCE NUMERALS

- 6: heat exchanger
- 8: drain pan
- 16: drain pump
- 19: antibacterial agent
- 23: suction port
- 26: impeller
- D: drain water
- K: antibacterial agent unit

### BEST MODE FOR CARRYING OUT THE INVENTION

Some preferred embodiments will be now described with reference to the attached drawings.

### <First Embodiment>

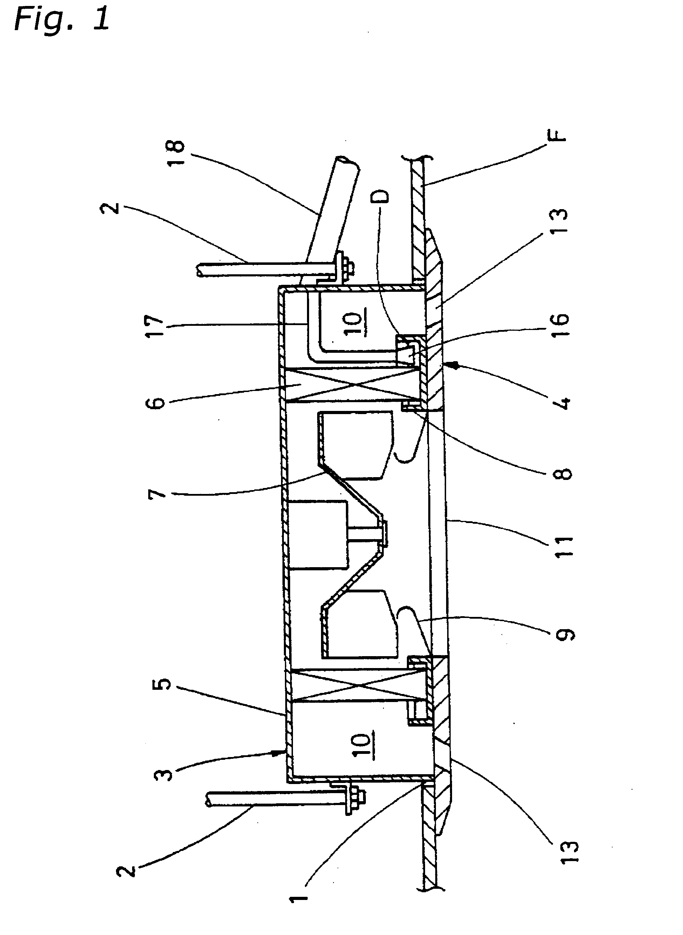

An air conditioner according to this embodiment is a ceiling embedded air conditioner. As shown in Figure 1, this air conditioner includes an air conditioner main body 3 which is located above a rectangular-shaped opening 1 formed in a ceiling F and which is suspended from and supported by a ridge beam (not shown) inside the ceiling via suspension bolts 2, 2, and a decorative panel 4 configured to cover the opening 1.

The air conditioner main body 3 has a heat exchanger 6 and a fan 7 provided inside a casing 5 in a generally rectangular parallelepiped shape. The air conditioner main body 3 also has a drain pan 8 below the heat exchanger 6, which is configured to receive drain water D that drops from the heat exchanger 6. Reference numeral 9 indicates a bellmouth, and reference numeral 10 indicates an air passage.

The decorative panel 4 has a rectangular shape with a size that is sufficient to cover the opening 1. The decorative panel 4 has an air inlet port 11 formed at the center thereof, and four air outlet ports 13 each of which communicate with the air passage 10 are formed around the air inlet port 11.

The heat exchanger 6 has a generally annular shape with an open portion. The heat exchanger 6 is, for example, a cross fin coil type heat exchanger.

The drain pan 8 has a generally annular shape with an open portion so as to correspond to the shape of the heat exchanger 6, and the drain pan 8 has a U shape in cross section. In addition, a drain pump 16 configured to pump up the drain water D is installed at one side of the drain pan 8. Reference numeral 17 is a discharge line of the drain pump 16, and reference numeral 18 is a drain line installed onsite.

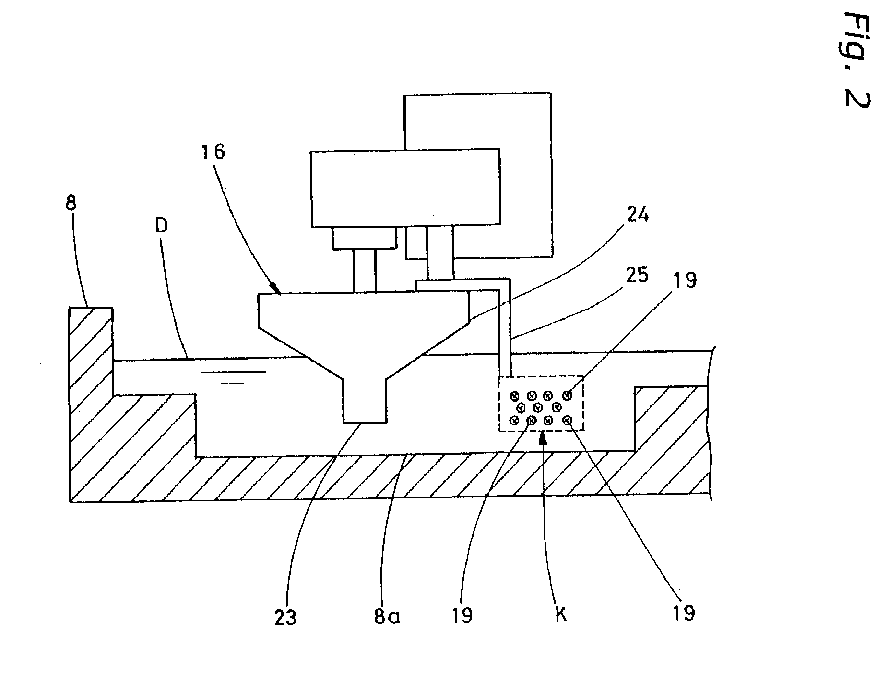

Figure 2 shows an attachment structure for attaching an antibacterial agent in the air conditioner according to the first embodiment of the present invention.

In this case, in the vicinity of a suction port 23 of the drain pump 16 in the drain pan 8, an antibacterial agent unit K having antibacterial agents 19, 19 -- capable of being brought into contact with the drain water D is disposed. The antibacterial agent unit K is attached to a scroll member 24 of the drain pump 16 via a support member 25. Typically, the suction port 23 of the drain pump 16 is disposed at a drain collection tank 8a, which is the lowest portion in the drain pan 8. This type of configuration can ensure that the drain pump 16 pumps up the drain water D.

This type of configuration allows the antibacterial agent unit K disposed in the vicinity of the suction port 23 of the drain pump 16 at a lowest portion 8a in the drain pan 8 to be reliably immersed into the drain water D when the drain pump 16 is operating and not operating. Accordingly, contact between the antibacterial agents 19, 19 -- and the drain water D is maintained at all times, thus achieving bacteriostasis in the drain water D (in other words, anti-slime effect). In addition, when the drain pump 16 is operating, the drain water D that contacted the antibacterial agents 19, 19flows to the downstream side of the drain pump 16, thus enhancing bacteriostasis on the downstream side of the drain pump 16. Further, the antibacterial agent unit K is attached to the scroll member 24 of the drain pump 16 via the support member 25. This type of configuration can simplify an attachment structure of the antibacterial agent unit K and also facilitate positioning and replacement of the antibacterial agent unit K.

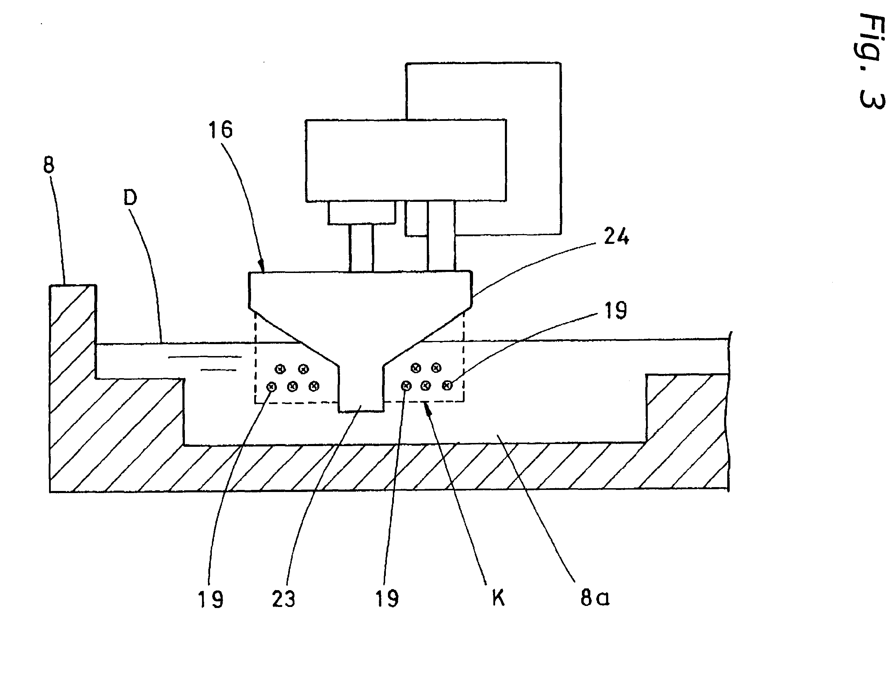

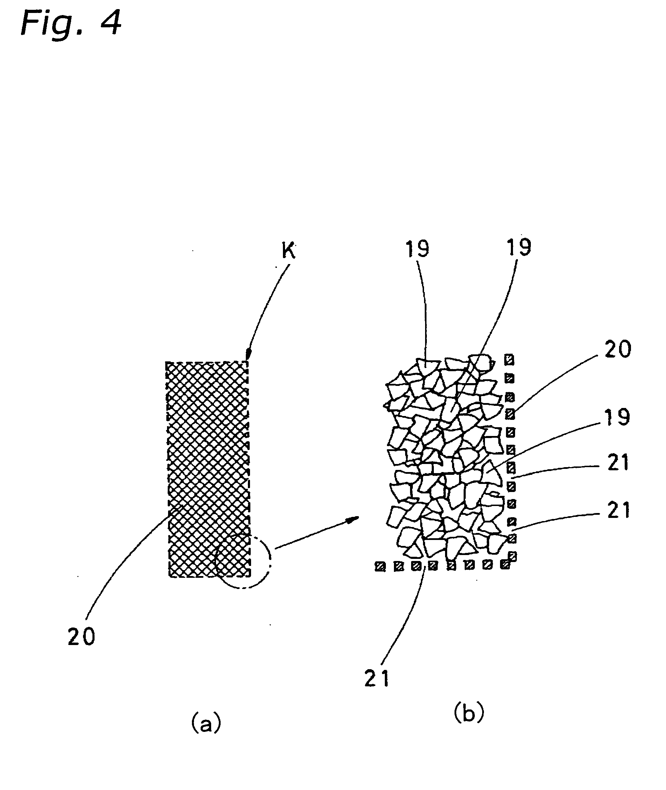

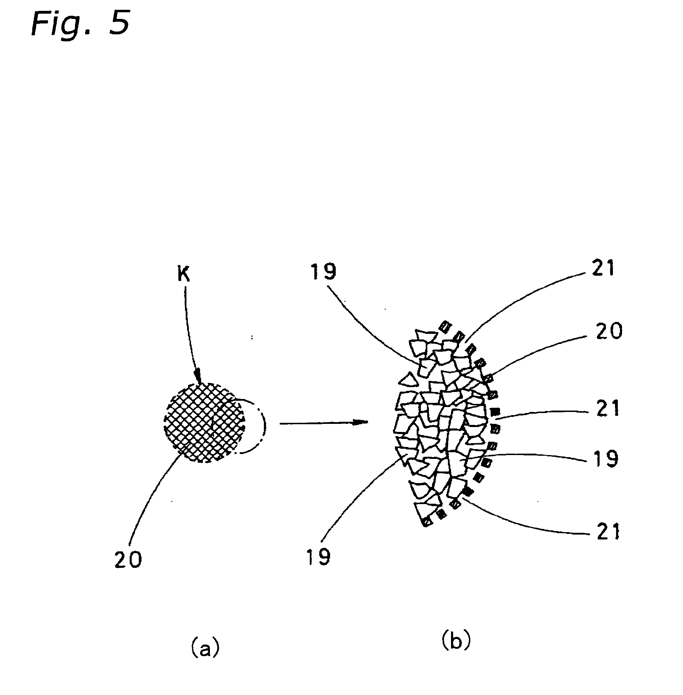

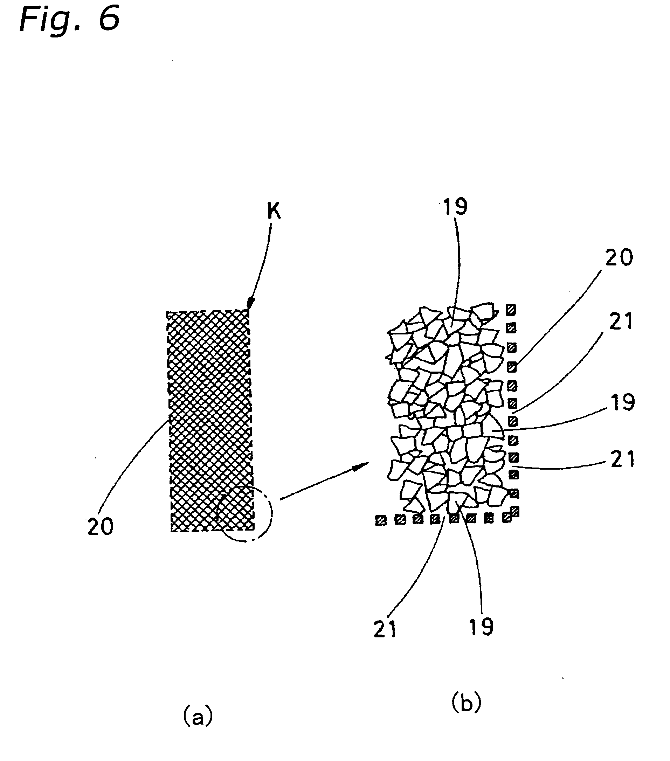

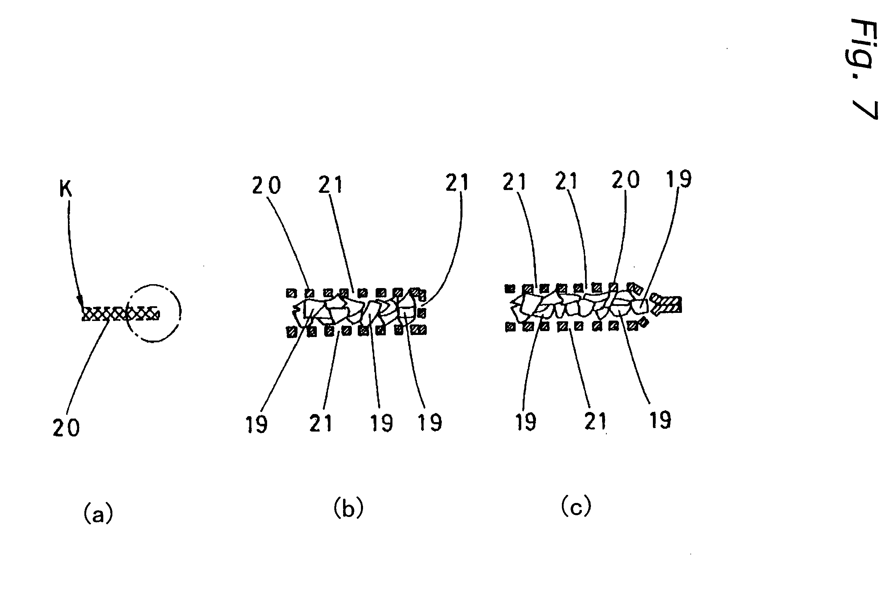

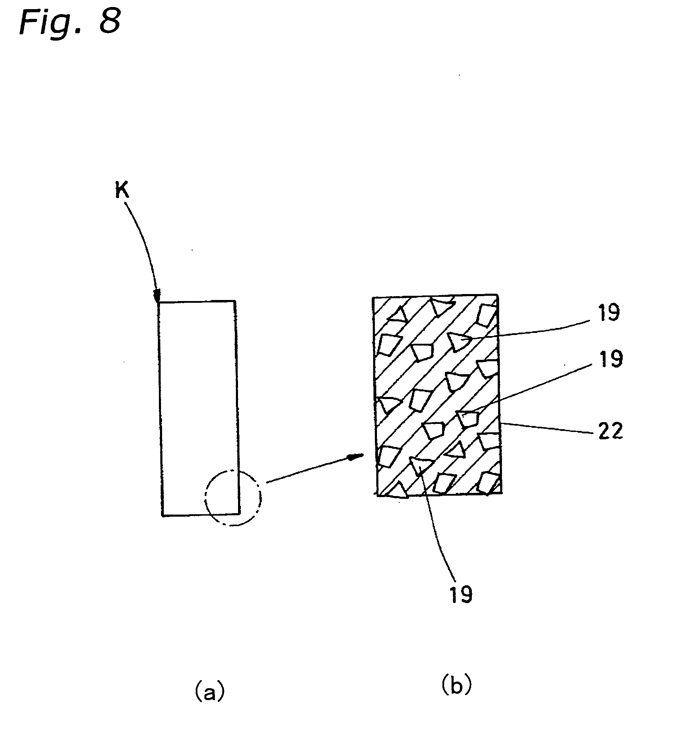

Incidentally, for example, the antibacterial agent unit K may be configured such that a container holder 20 in a cylindrical shape having a number of pore portions 21, 21, houses the antibacterial agents 19, 19 - in a granular shape or a pellet shape, as shown in elevation view in Figure 3(a), enlarged view of the inside in Figure 3(b), plan view in Figure 4(a), and enlarged view of the inside in Figure 4(b). Also, for example, the antibacterial agent unit K may be configured such that the holder 20 in a sheet shape having a number of pore portions 21, 21, houses the antibacterial agents 19, 19 -- in a granular shape or a pellet shape, as shown in elevation view in Figure 5(a), enlarged view of the inside in Figure 5(b), plan view in Figure 6(a), and enlarged view of the inside in Figure 6(b). Note that as shown in enlarged view of the inside in Figure 6(c), the holder 20 may be configured with a net-like member in which peripheral portions thereof are welded to each other. In these cases, the size of each pore portion 21 is made smaller than the particle diameter or the pellet diameter of each antibacterial agent 19. Note that the shape of the container holder 20 may be different than the above described shapes (for example, it may be a polygonal cylindrical shape or an elliptic cylindrical shape). The wall surface thereof may be made of any material such as net, highly-porous member, nonwoven fabric, punching plate, etc., as long as the pore portion is formed in the wall surface (the pore portion does not has to be a definite opening as long as water can flow in and flow out therethrough). In addition, the shape of the pore portion can be any shape. In addition, the material of the container holder 20 may be anything such as metal, synthetic resin, fabric, and the like, as long as the material is generally insoluble in water. Further, the container holder 20 may be self standing (in other words, it can maintain its shape on its own) or may not be self standing (in other words, it cannot maintain its shape on its own, like a bag). In addition, in some cases, the antibacterial agent unit K may be configured with the antibacterial agents 19, 19kneaded into a holding member 22 formed by a synthetic resin, as shown in plan view in Figure 7(a), enlarged view of the inside in Figure 7(b), plan view in Figure 8(a), and enlarged view of the inside in Figure 8(b). In this case, the shape of the holding member 22 may be any of the following shapes: cylindrical column shape, polygonal column shape, elliptic column shape, sheet-like shape, and the like.

As the antibacterial agents 19, 19 --, examples of the conventionally known agents include: alcohol compound such as ethanol, propanol; phenol compound such as phenol, OPP, thymol, parachlorometaxylenol, 2,5-dichloro-4-bromophenol; aldehyde compound such as formalin, BCA; carboxylic compound such as zinc undecylenate, benzoic acid, propionic acid; ester compounds such as fatty acid monoglyceride, paraben; ether compound such as triclosan; nitrile compound such as TPN; peroxide such as hydrogen peroxide, potassium permanganate; epoxy compound such as ethylene oxide; halogen compound such as povidone-iodine, chloronaphthalene; haloalkyl compound such as N-(fluorodichloromethylthio)-phthalimide, N, N-dimethyl N'-phenyl-N'-(fluorodichloromethylthio) sulphamid; pyridine, quinoline compound such as oxine, zinc omadine; triazine compound such as hexamine; isothiazoline compound such as KEISON (registered trademark); imidazole, thiazole compound such as TBZ, methyl-2-benzimidazole carbide; anilide compound such as trichlorocarbanilide; biguanide compound such as gluconic acid chlorhexidine; disulfide compound such as TMTD; thiocarbamate compound such as carbam; surface active agent such as benzalkonium chloride, alkyl glycine hydrochloride; organometallic compound such as vinyzene, oxine copper; inorganic antibacterial agent composed mainly of inorganic compound such as silver (Ag), copper (Cu), zinc (Zn), tin (Sn), etc,; mercuric compound such as mercuric chloride, mercuric oxycyanide; silver compound such as silver nitrate; chlorine compound such as sodium hypochlorite, chlorine dioxide; iodine compound such as iodine, iodoform; boric acid compound such as boric acid; lime compound such as calciuim oxide; zeolitic antibacterial agent such as ZEOMIC (registered trademark), BACTEKILLER (registered trademark); silica gel antibacterial agent such as AMENITOP (registered trademark), SILWELL (registered trademark); silicate glass antibacterial agent such as IONPURE (registered trademark); hydroxyapatite antibacterial agent such as ANTIBACTERIAL CERAMICS (registered trademark), APACIDER A (registered trademark); calcium phosphate antibacterial agent such as NARUKURIN (registered trademark); insoluble phosphoric acid salt antibacterial agent such as RASAP AN (registered trademark); phosphoric zirconium antibacterial agent such as NOVARON (registered trademark); silicate salt antibacterial agent such as AIS (registered trademark), RENTOBA (registered trademark); titanium oxide antibacterial agent such as ATOMYBALL (registered trademark); whisker antibacterial agent such as AMTECLEAN Z (registered trademark); HOLONKILLER (registered trademark); AM15 (registered trademark). In this embodiment, in view of influence on human body and environment, it is preferable to use chemicals such as ethanol, parachlorometaxylenol, 2,5-dichloro-4-bromophenol, hydrogen peroxide, N-(fluorodichloromethylthio)-phthalimide, N, N-dimethyl-N'-phenyl-N'-(fluorodichloromethylthio)-sulphamide, vinyzene, sodium hypochlorite, chlorine dioxide, ZEOMIC (registered trademark), BACTEKILLER (registered trademark), AMENITOP (registered trademark), SILWELL (registered trademark), IONPURE (registered trademark), ANTIBACTERIAL CERAMICS (registered trademark), APACIDER A (registered trademark), RASAP AN (registered trademark), NOVARON (registered trademark), AIS (registered trademark), RENTOBA (registered trademark), ATOMYBALL (registered trademark), AMTECLEAN Z (registered trademark), HOLONKILLER, AM15 (registered trademark), etc. However, a different antibacterial agent may be preferably used as long as it can detoxify or trap the agent before the drain water is discharged to the outside. In addition, when an inorganic antibacterial agent is used, such an antibacterial agent may be supported by, for example, calcium carbonate, zeolite, kaolin clay, diatom earth, talc, bentonite, ceramics, activated carbon, apatite, etc. An inorganic antibacterial agent supported by ceramics, activated carbon, apatite, etc. has advantages in that it is significantly antibacterial, nonvolatile, and easy to knead with a resin. Further, like a water soluble glass that supports an inorganic antibacterial agent, there is an inorganic antibacterial agent having a granular shape or a pellet shape which exerts its bactericidal effect by being dissolved by water.

Note that, in this embodiment, the ceiling embedded air conditioner is described, however, the present invention is of course applicable to an air conditioner of a different type.

### <Second Embodiment>

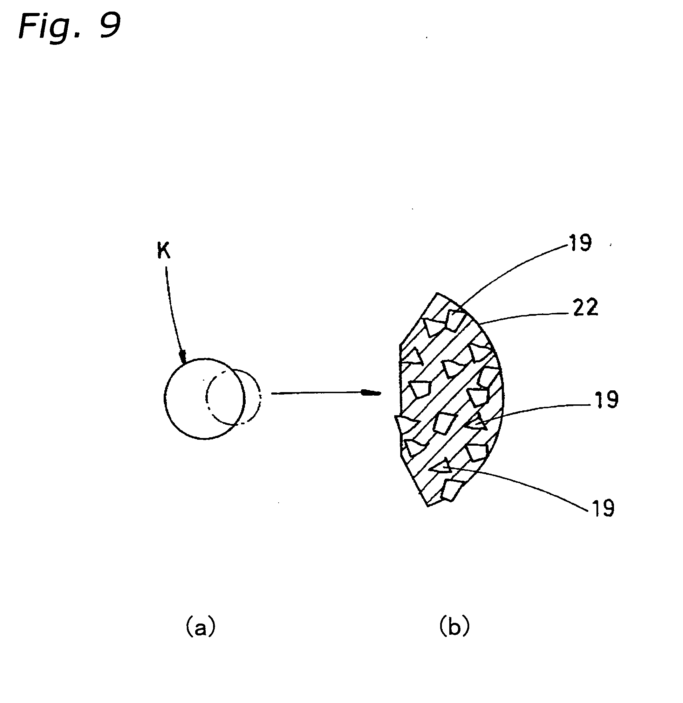

Figure 9 shows an attachment structure for attaching an antibacterial agent in an air conditioner according to a second embodiment of the present invention. Note that, here, the schematic view of the air conditioner main body is the same as that of the air conditioner main body 3 according to the first embodiment, as shown in Figure 1.

In this case, the antibacterial agent unit K is directly attached to a lower outer surface (including a peripheral portion of the suction port 23) of the scroll member 24 of the drain pump 16. When configured in this manner, the antibacterial agent unit K arranged at the outer surface of the scroll member 24 of the drain pump 16 disposed at the drain collection tank 8a, which is the lowest portion in the drain pan 8, will be reliably immersed into the drain water D when the drain pump 16 is operating and not operating. Accordingly, contact between the antibacterial agents 19, 19 -- and the drain water D is maintained at all times, thus achieving bacteriostasis in the drain water D (in other words, anti-slime effect). In addition, when the drain pump 16 is operating, the drain water D that contacted the antibacterial agents 19, 19 -- flows to the downstream side of the drain pump 16, thus enhancing bacteriostasis on the downstream side of the drain pump 16. Further, the antibacterial agent unit K is directly attached to the outer surface of the scroll member 24 of the drain pump 16, thus it is possible to simplify an attachment structure of the antibacterial agent unit K and also facilitate positioning and replacement of the antibacterial agent unit K. Note that the antibacterial agent unit K according to this embodiment is the same as the antibacterial agent unit according to the first embodiment.

Note that, in this embodiment, the ceiling embedded air conditioner is described, however, the present invention is of course applicable to an air conditioner of a different type.

### <Third Embodiment>

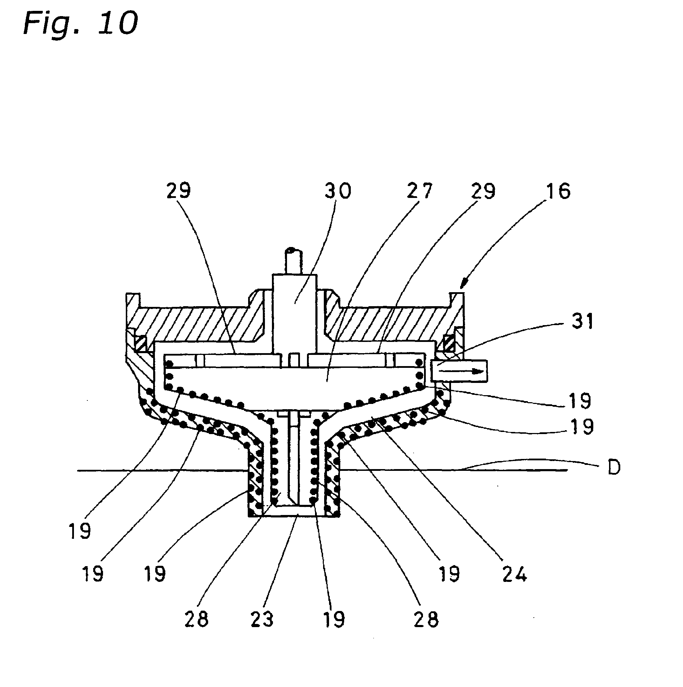

Figure 10 shows an attachment structure for attaching an antibacterial agent in an air conditioner according to a third embodiment of the present invention. Note that, here, the schematic view of the air conditioner main body 3 is the same as that of the air conditioner main body according to the first embodiment, as shown in Figure 1.

In this case, a member which constitutes the drain pump 16 and which is capable of being brought into contact with the drain water D is formed from an antibacterial material into which antibacterial agents 19, 19 -- are kneaded. In this embodiment, specifically, a tray 27 and auxiliary vanes 28, 28 -- which constitute the inside and outside peripheral surface of the scroll member 24 of the drain pump 16 and an impeller 26 are formed by antibacterial materials into which the antibacterial agents 19, 19 -- are kneaded. Reference numeral 29 indicates a main vane, reference numeral 30 indicates a rotation shaft, and reference numeral 31 indicates a discharge port.

This type of configuration allows the drain water D that contacted the antibacterial agents 19, 19 - - to flow to the downstream side of the drain pump 16 when the drain pump 16 is operating, thus enhancing bacteriostasis on the downstream side of the drain pump 16. In addition, since the return drain water D during the time when the drain pump 16 is not operating will always contact the antibacterial agents 19, 19 --, it is possible to wash the antibacterial agents 19, 19and achieve bacteriostasis. Further, this type of configuration ensures contact between the drain water D and the antibacterial agents 19, 19 -- not only when the drain pump 16 is operating but also when the drain pump 16 is not operating, which consequently enhances bacteriostasis. In addition, since the impeller 26 is a member that is rotationally driven when the drain pump is operating, contact rate between the antibacterial agents 19, 19 -- and the drain water D increases, further enhancing bacteriostasis. Note that the antibacterial agent unit K according to this embodiment is the same as the antibacterial agent unit according to the first embodiment.

Note that, in this embodiment, the ceiling embedded air conditioner is described, however, the present invention is of course applicable to an air conditioner of a different type.

### <Fourth Embodiment>

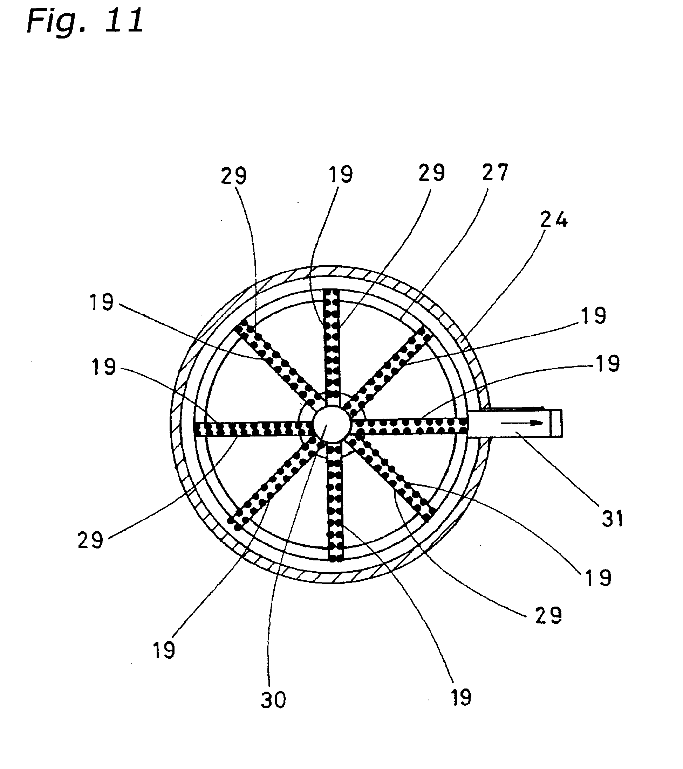

Figure 11 shows an attachment structure for attaching an antibacterial agent in an air conditioner according to a fourth embodiment of the present invention. Note that, here, the schematic view of the air conditioner main body 3 is the same as that of the air conditioner main body according to the first embodiment, as shown in Figure 1.

In this case, the main vane 29 that constitutes the impeller 26 is formed by an antibacterial material into which the antibacterial agents 19, 19 -- are kneaded. Note that the antibacterial agent unit K according to this embodiment is the same as the antibacterial agent unit according to the first embodiment. When configured in this manner, since the impeller 26 is a member that is rotationally driven when the drain pump is operating, contact rate between the antibacterial agents 19, 19 -- and the drain water D increases, further enhancing bacteriostasis. Other structures and effects in this embodiment are the same as those in the third embodiment, thus explanations thereof are omitted.

Note that, in this embodiment, the ceiling embedded air conditioner is described, however, the present invention is of course applicable to an air conditioner of a different type.

### <Fifth Embodiment>

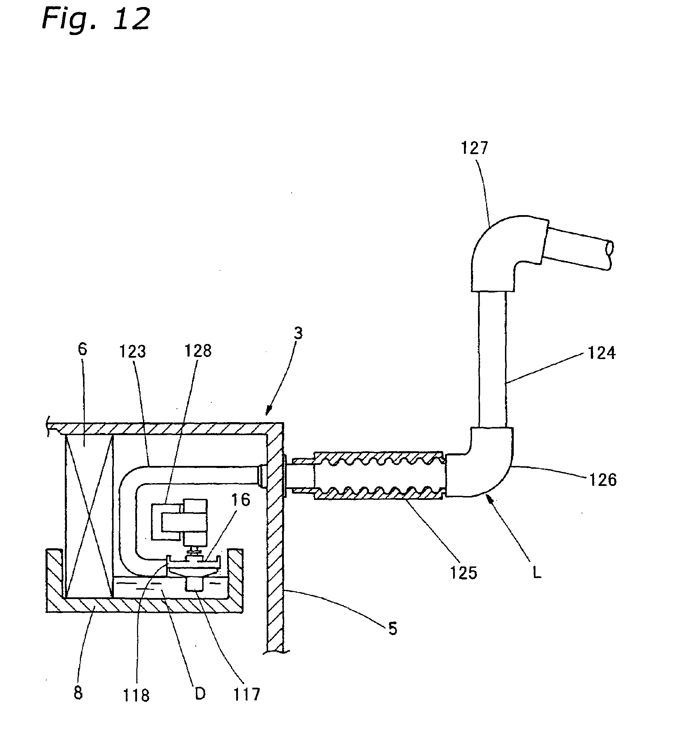

Figure 12 shows an attachment structure for attaching an antibacterial agent in an air conditioner according to a fifth embodiment of the present invention. Note that, here, the schematic view of the air conditioner main body 3 is the same as that of the air conditioner main body according to the first embodiment, as shown in Figure 1.

In the air conditioner as configured above, as shown in Figure 12, a drain line L is located on the downstream side of the discharge port 118 of the drain pump 16, at a position higher than a discharge port 118. This drain line L has the antibacterial agents 19, 19 --, which are capable of being brought into contact with the drain water D. Here, the drain line L includes a discharge line 123 of the drain pump 16, a pipe connection portion 125 configured to connect the discharge line 123 located inside the air conditioner main body 3 to a drain hose 124 located outside the air conditioner main body 3, the drain hose 124 installed onsite, and elbows 126, 127 provided at curved portions of the drain hose 124. Reference numeral 128 indicates a motor as a driving source of the drain pump 16.

In this case, the antibacterial agents 19, 19 -- may be kneaded into the inner peripheral surfaces of all members (for example, the discharge line 123, the pipe connection portion 125, the drain hose 124, and the elbows 126, 127) that constitute the drain line L or into the inner peripheral surfaces of some members (for example, the pipe connection portion 125, the drain hose 124, and the elbows 126, 127) located outside of the air conditioner main body (i.e. indoor unit) 3.

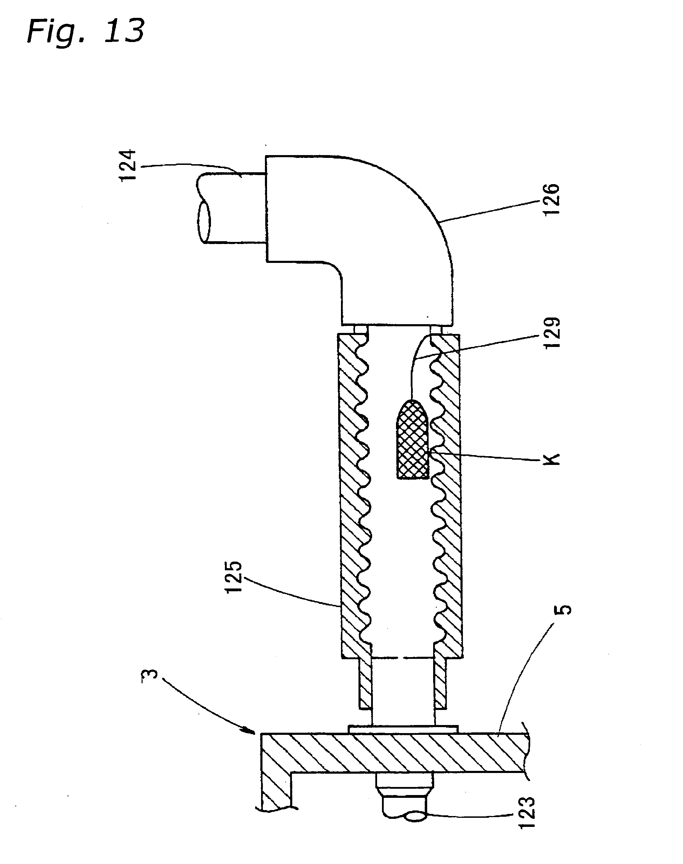

In particular, as Figure 13, when the antibacterial agent unit K (see Figures 3 to 8) used in the first embodiment is disposed inside the pipe connection portion 125, the contact area between the drain water D and the antibacterial agents 19, 19 -- can be increased, enabling to maintain bacteriostasis for a long period of time. In addition, since the pipe connection portion 125 is removably configured, it is easy to perform maintenance and replacement of the antibacterial agent unit K. Reference numeral 129 indicates a support string configured to support the antibacterial agent unit K.

This type of configuration allows the drain water D that flows through the drain line L to contact the antibacterial agents 19, 19 -- when the drain pump 16 is operating, which consequently enhances bacteriostasis on the downstream side of the drain pump 16 (preventing the growth of slimes). On the other hand, when the drain pump 16 is not operating, the return water containing highly-concentrated antibacterial agents remaining in the drain line L will flow back into the drain pan 8, enhancing bacteriostasis in the drain pan 8 (preventing the growth of slimes). Accordingly, the growth of slimes in the drain line L and the drain pan 8 can be effectively prevented.

Note that an antibacterial agent used in this embodiment includes the antibacterial agent used in the first embodiment and the like.

### <Sixth Embodiment>

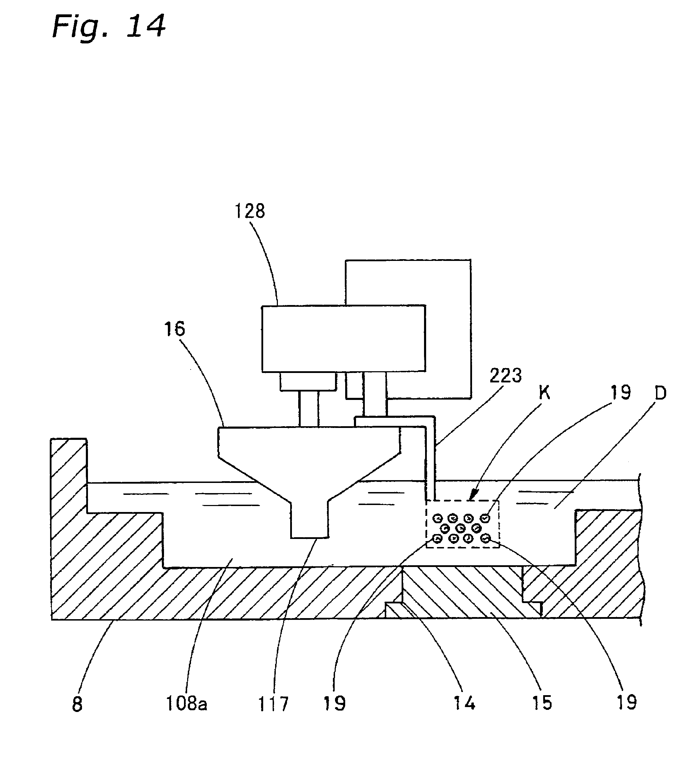

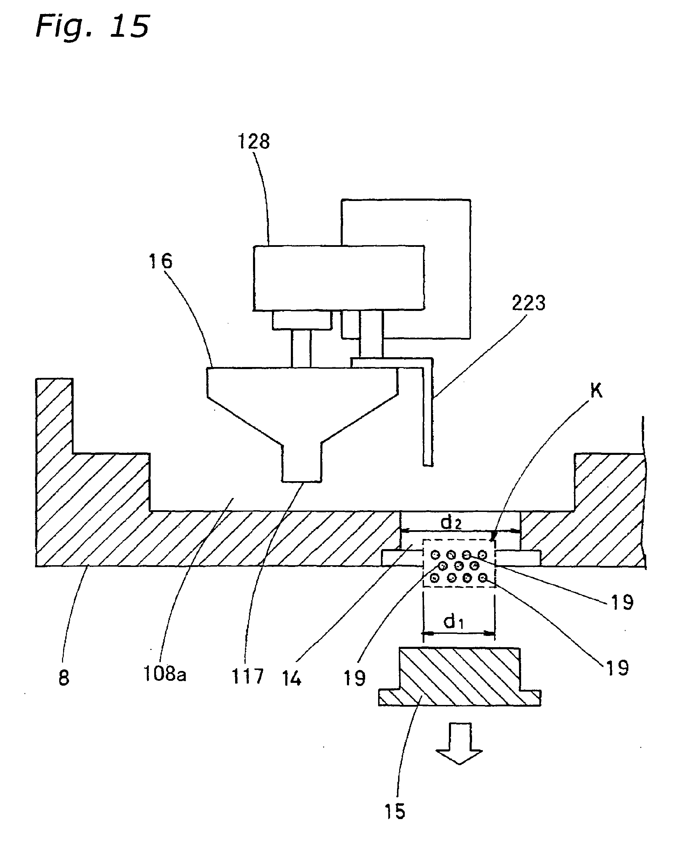

Figures 14 and 15 both show an essential portion of a drain discharge device according to a sixth embodiment of the present invention. Note that, in this embodiment, the drain discharge device includes the drain pan 8 and the drain pump 16. In addition, here, the schematic view of the air conditioner main body 3 is the same as that of the air conditioner main body according to the first embodiment, as shown in Figure 1.

In this case, as shown in Figure 14, a drain hole 14 for draining the drain water D in the drain pan 8 is formed at a deepest portion 108a of the drain pan 8, and the drain hole 14 has a drain cock 15 that is freely removably disposed. Reference numeral 117 indicates a suction port of the drain pump 16, and reference numeral 128 indicates a motor as a driving source of the drain pump 16.

The antibacterial agent unit K having the antibacterial agents 19, 19 -- which provide bacteriostasis in the drain water D is disposed above the drain cock 15 in the drain pan 8. Note that the antibacterial agent unit K according to this embodiment is the same as the antibacterial agent unit according to the first embodiment. In this case, the antibacterial agent unit K is removably attached to the drain pump 16 via a support member 223. In this case, the diameter d₁ of the antibacterial agent unit K is smaller than the diameter d₂ of the drain hole 14 (see Figure 15). Here, disposing the antibacterial agent unit K above the drain cock 15 indicates a state in which the drain water D is present between the drain cock 15 and the antibacterial agent unit K.

This type of configuration can inhibit the growth of bacteria in the drain water D by bacteriostasis of the antibacterial agents 19, 19 -- contained in the antibacterial agent unit K disposed above the drain cock 15 (in other words, disposed at the deepest portion 108a in the drain pan 8) when the drain water D is present in the drain pan 8. Thus, the growth of slimes in the drain pan 8 can be prevented.

On the other hand, when the drain cock 15 is removed in order to drain the drain water D in the drain pan 8, it will be possible to remove the antibacterial agent unit K and thus it will be possible to easily perform maintenance operation on the antibacterial agent unit K (see Figure 15).

Note that, in this embodiment, the drain discharge device of the air conditioner is described, however, the present invention is of course applicable to a drain up kit and the like, which is disposed in a midway of the drain line extending from the air conditioner.

### <Seventh Embodiment>

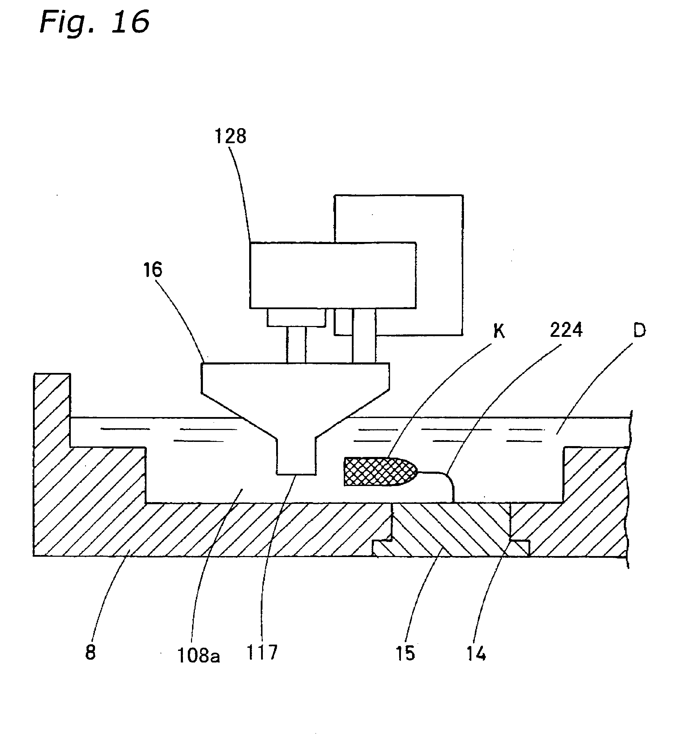

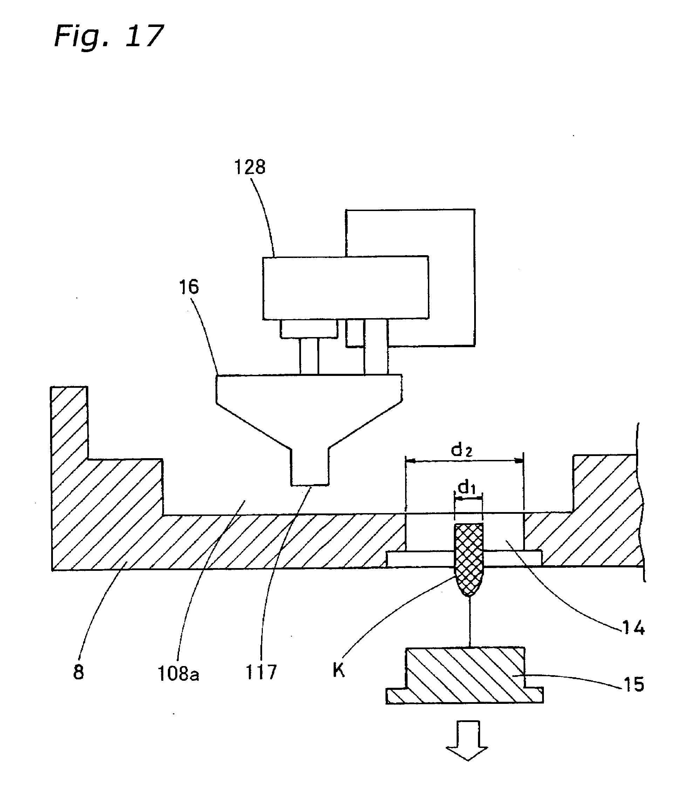

Figures 16 and 17 both show an essential portion of a drain discharge device according to a seventh embodiment of the present invention. Note that, here, the schematic view of the air conditioner main body 3 is the same as that of the air conditioner main body according to the first embodiment, as shown in Figure 1.

In this case, inside the drain pan 8 is provided with the antibacterial agent unit K which is connected to the drain cock 15 via a connecting member 224 and which has the antibacterial agents 19, 19 -- which provide bacteriostasis in the drain water D. Note that the antibacterial agent unit K according to this embodiment is the same as the antibacterial agent unit according to the first embodiment.

This type of configuration can inhibit the growth of bacteria in the drain water D by bacteriostasis of the antibacterial agents 19, 19 -- contained in the antibacterial agent unit K connected to the drain cock 15 via the connecting member 224 (in other words, disposed at the deepest portion 108a in the drain pan 8) when the drain water D is present in the drain pan 8. Thus, the growth of slimes in the drain pan 8 can be prevented.

On the other hand, when the drain cock 15 is removed in order to drain the drain water D in the drain pan 8, it will be possible to remove the antibacterial agent unit K together with the drain cock 15 and thus it will be possible to easily perform maintenance operation on the antibacterial agent unit K.

Other structures and effects in this embodiment is the same as those in the sixth embodiment, thus explanations thereof are omitted.

Note that, in this embodiment, the drain discharge device of the air conditioner is described, however, the present invention is of course applicable to a drain up kit and the like, which is disposed in a midway of a drain line extending from the air conditioner.

### <Eighth Embodiment>

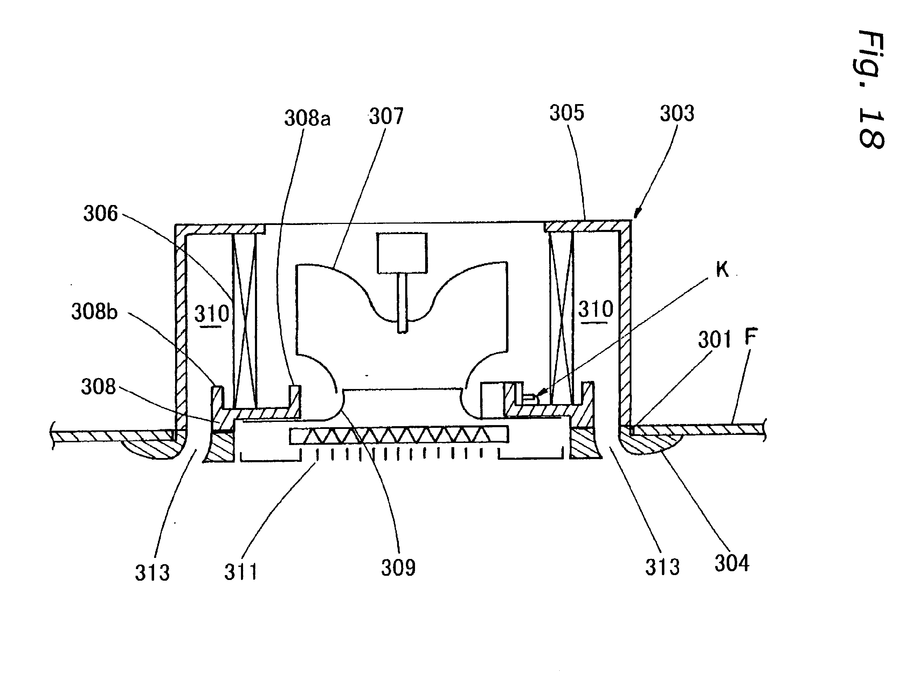

Figure 18 shows an attachment structure for attaching an antibacterial agent in an air conditioner according to an eighth embodiment of the present.

An air conditioner according to this embodiment is a ceiling embedded air conditioner. As shown in Figure 18, this air conditioner includes an air conditioner main body 303 which is located above a rectangular-shaped opening 301 formed in a ceiling F and which is suspended from and supported by a ridge beam (not shown) inside the ceiling via suspension bolts (not shown), and a decorative panel 304 configured to cover the opening 301.

The air conditioner main body 303 has a generally annular heat exchanger 306 in a casing 305 having a generally rectangular parallelepiped shape, and a fan 307 located in the heat exchanger 306. The air conditioner main body 303 also has a drain pan 308 which is located below the heat exchanger 306 and configured to receive drain water D that drops from the heat exchanger 306. Reference numeral 309 indicates a bellmouth, and reference numeral 310 indicates an air passage.

The decorative panel 304 has a rectangular shape with a size that is sufficient to cover the opening 301. The decorative panel 304 has an air inlet port 311 formed at the center thereof, and four air outlet ports 313, each of which communicates with the air passage 310, are formed around the air inlet port 311.

The heat exchanger 306 has a generally annular shape with an open portion. The heat exchanger 306 is, for example, a cross fin coil type heat exchanger.

The drain pan 308 has a generally annular shape with an open portion so as to correspond to the shape of the heat exchanger 306, and the drain pan 308 has a U shape in cross section.

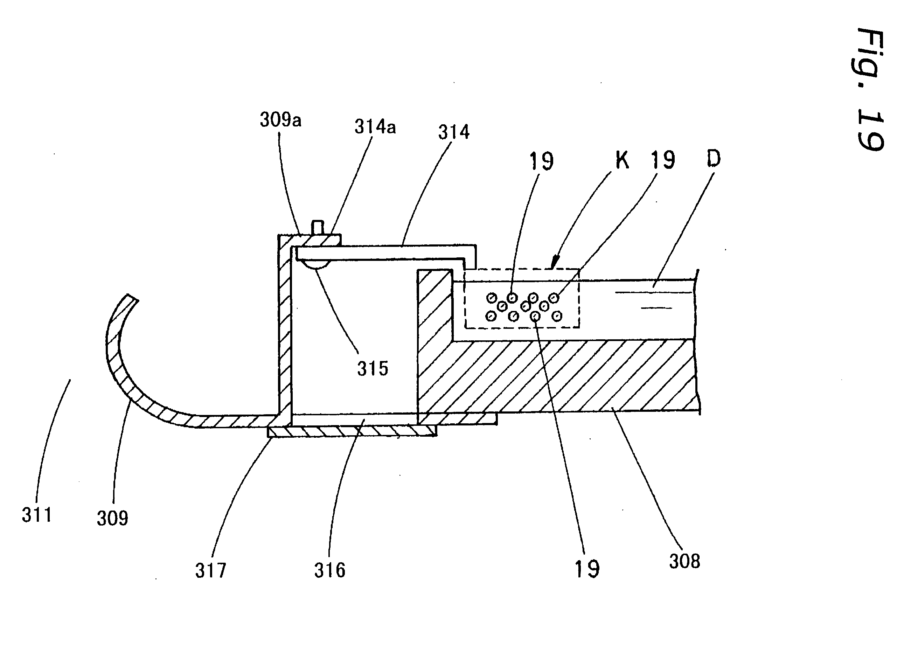

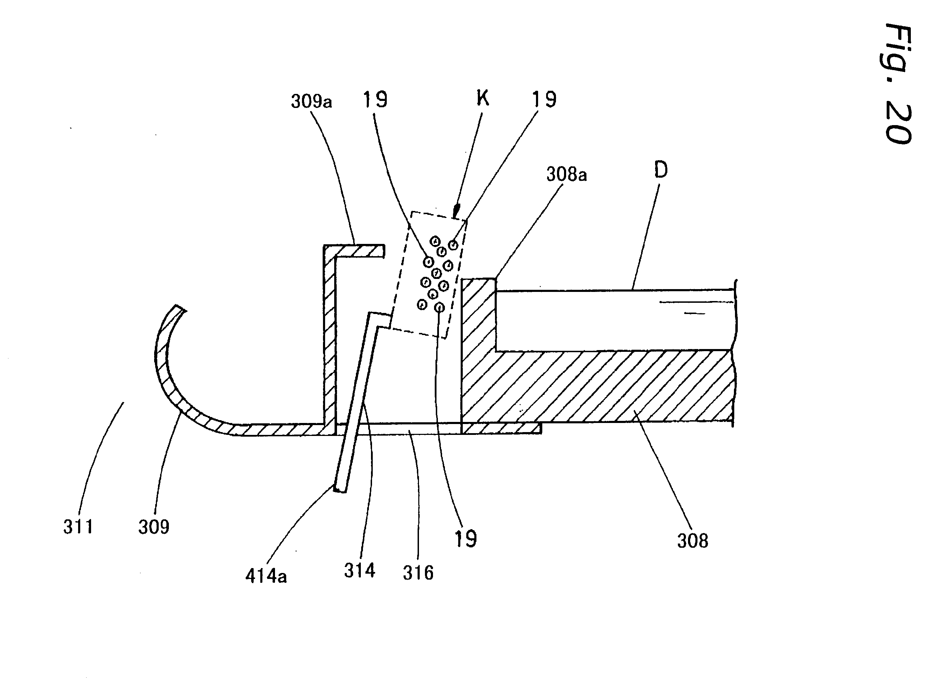

Figures 19 and 20 both show an essential portion of an air conditioner according to an eighth embodiment of the present.

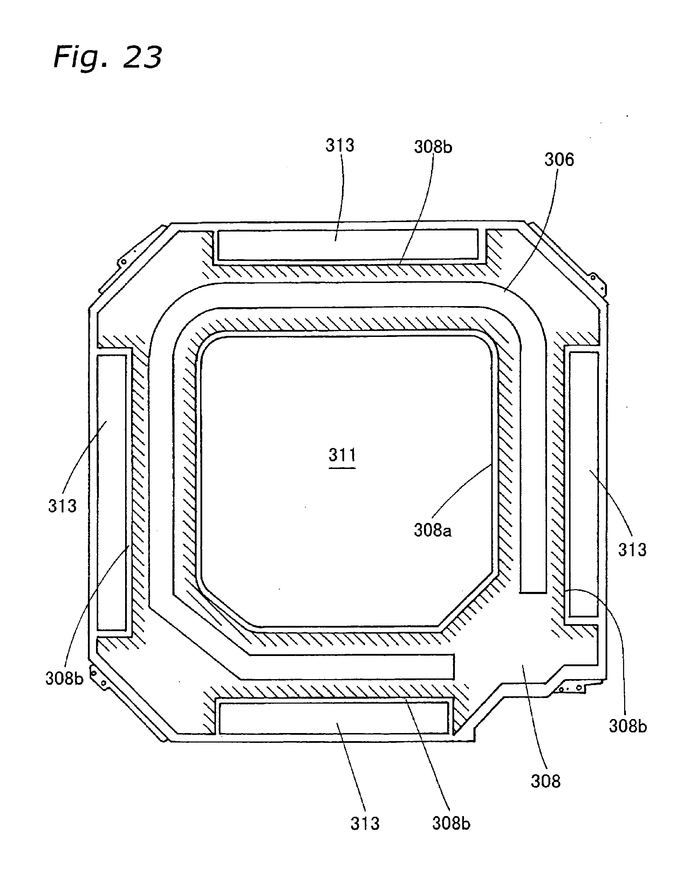

In this case, as shown in Figure 19, inside the drain pan 308 is provided with the antibacterial agent unit K having the antibacterial agents 19, 19 -- which provide bacteriostasis in the drain water D in a space between the heat exchanger 306 and an inner peripheral wall (in other words, the suction port side peripheral wall) 308a, and a support member 314 of the antibacterial agent unit K extends in the direction of the bellmouth 309 through above the inner peripheral wall (in other words, suction port side peripheral wall) 308a of the drain pan 308. An inner end portion 314a of the support member 314 is removably attached to a rim 309a formed at the inner peripheral upper end of the bellmouth 309 by a screw 315 (in this embodiment, the area in which the antibacterial agent unit K may be disposed is a portion shown by diagonal lines in Figure 23, that is, the area in the vicinity of the inner peripheral wall 308a and an outer peripheral wall 308b of the drain pan 8). A working opening 316 is formed between the bellmouth 309 and the drain pan 308, and the working opening 316 is covered by a cover plate 317 that is freely removable. Note that the antibacterial agent unit K according to this embodiment is the same as the antibacterial agent unit according to the first embodiment.

This type of configuration can inhibit the growth of bacteria in the drain water D by bacteriostasis of the antibacterial agents 19, 19 -- contained in the antibacterial agent unit K when the drain water D is present in the drain pan 308. Thus, the growth of slimes in the drain pan 308 can be prevented.

On the other hand, as shown in Figure 20, when the cover plate 317 is removed in a state in which the decorative panel 304 is removed, it will be possible to remove the screw 315 from the working opening 316 (in other words, the air inlet port 311 side). As a result, by removing the support member 314 of the antibacterial agent unit K from the working opening 316, it will be possible to easily perform replacement or installation of additional antibacterial agent unit K (in other words, maintenance operation on the antibacterial agent unit K), without the need to remove the drain pan 308.

Note that, in this embodiment, the ceiling embedded air conditioner of four-direction airflow type is described, however, the present invention is of course applicable to a ceiling embedded air conditioner of two-direction airflow or one-direction airflow type.

### <Ninth Embodiment>

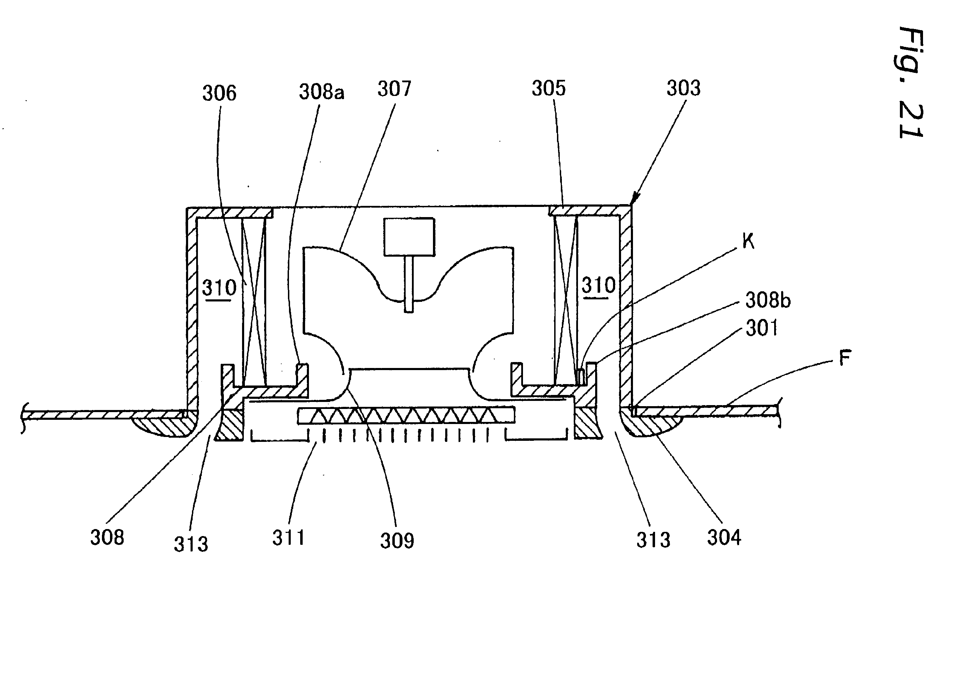

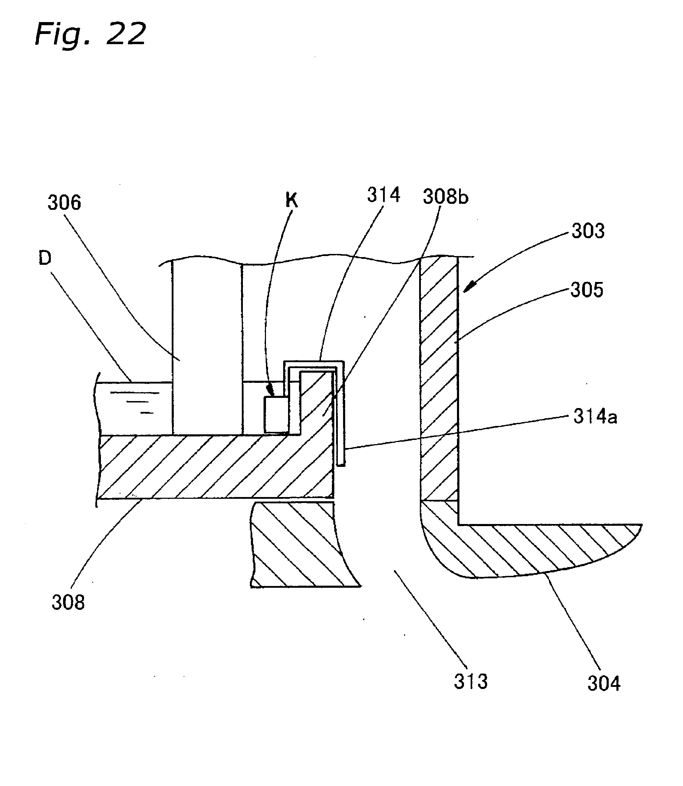

Figures 21 and 22 both show an essential portion of an air conditioner according to a ninth embodiment of the present invention.

In this case, inside the drain pan 308 is provided with the antibacterial agent unit K at a position between the outer peripheral wall (in other words, the discharge port side peripheral wall) 308b and the heat exchanger 306. The support member 314 of the antibacterial agent unit K has a generally inverted L shape and is held by the outer peripheral wall (in other words, the discharge port side peripheral wall) 308b of the drain pan 308 (in this embodiment, the area in which the antibacterial agent unit K may be disposed is a portion shown by diagonal lines in Figure 23, that is, the area in the vicinity of the inner peripheral wall 308a and an outer peripheral wall 308b of the drain pan 8). In other words, an outer end portion 414a of the support member 314 is configured so as to be removable from the air outlet port 313. Note that the antibacterial agent unit K according to this embodiment is the same as the antibacterial agent unit according to the first embodiment.

This type of configuration can inhibit the growth of bacteria in the drain water D by bacteriostasis of the antibacterial agents 19, 19 -- contained in the antibacterial agent unit K when the drain water D is present in the drain pan 308. Thus, the growth of slimes in the drain pan 308 can be prevented.

On the other hand, as shown in Figure 22, by removing the support member 314 of the antibacterial agent unit K from the air outlet port 313 of the decorative panel 304, it will be possible to easily perform replacement or installation of additional antibacterial agent unit K (in other words, maintenance operation on the antibacterial agent unit K), without the need to removal the drain pan 308.

Other structures and effects in this embodiment are the same as those in the eighth embodiment, thus explanations thereof are omitted.

Note that, in this embodiment, the ceiling embedded air conditioner of four-direction airflow type is described, however, the present invention is of course applicable to a ceiling embedded air conditioner of two-direction airflow or one-direction airflow type.

### INDUSTRIAL APPLICABILITY

The air conditioner according to the present invention has characteristics capable of simplifying the attachment structure of the antibacterial agent unit K and also facilitating positioning and replacement of the antibacterial agent unit K. The air conditioner according to the present invention is useful as an air conditioner for home and hospital use.

## Claims

1. An air conditioner comprising a heat exchanger (6), a drain pan (8) configured to receive drain water (D) from the heat exchanger (6), and a drain pump (16) configured to pump out the drain water (D) disposed in the drain pan (8), wherein
an antibacterial agent unit (K) having antibacterial agents (19), (19)capable of being brought into contact with the drain water D is disposed in the vicinity of a suction port (23) of the drain pump (16) in the drain pan (8).

2. The air conditioner according to claim 1 wherein
the antibacterial agent unit (K) is attached to the drain pump (16).

3. An air conditioner comprising a heat exchanger (6), a drain pan (8) configured to receive drain water (D) from the heat exchanger (6), and a drain pump (16) configured to pump out the drain water (D) disposed in the drain pan (8), wherein
a member constituting the drain pump (16) and capable of being brought into contact with the drain water D is formed by an antibacterial material into which antibacterial agents (19), (19) -- are kneaded.

4. The air conditioner according to claim 3, wherein
the member formed by the antibacterial material is a scroll member (24).

5. The air conditioner according to either claim 3 or claim 4, wherein
the member formed by the antibacterial material is an impeller (26).
